Europäisches Patentamt

European Patent Office

Office européen des brevets

(19)

(11) Publication number: **0 038 198**
**B1**

(12) **EUROPEAN PATENT SPECIFICATION**

(45) Date of publication of patent specification: **28.12.83**

(21) Application number: **81301602.9**

(22) Date of filing: **10.04.81**

(51) Int. Cl.³: **B 21 D 43/10,**
**B 21 D 43/02, B 23 Q 3/06**

(54) Workpiece clamp.

(30) Priority: **10.04.80 GB 8011933**

(43) Date of publication of application:
**21.10.81 Bulletin 81/42**

(45) Publication of the grant of the patent:
**28.12.83 Bulletin 83/52**

(84) Designated Contracting States:
**DE FR GB IT NL SE**

(56) References cited:
**FR - A - 383 052**
**FR - A - 1 517 642**
**FR - A - 2 277 025**
**FR - A - 2 349 404**
**US - A - 3 839 936**

(73) Proprietor: **Joseph Rhodes Limited**
**Belle Vue**
**Wakefield West Yorkshire WF1 5EQ (GB)**

(72) Inventor: **Mills, Peter**
**36-40 High Street**
**Slough Berkshire SL1 1EL (GB)**

(74) Representative: **Wilson, Joseph Martin et al,**
**WITHERS & ROGERS 4 Dyer's Buildings Holborn**
**London EC1N 2JT (GB)**

Courier Press, Leamington Spa, England.

Workpiece clamp

This invention relates to a workpiece clamp for holding a workpiece sheet relative to the punch head of a punch press during punching.

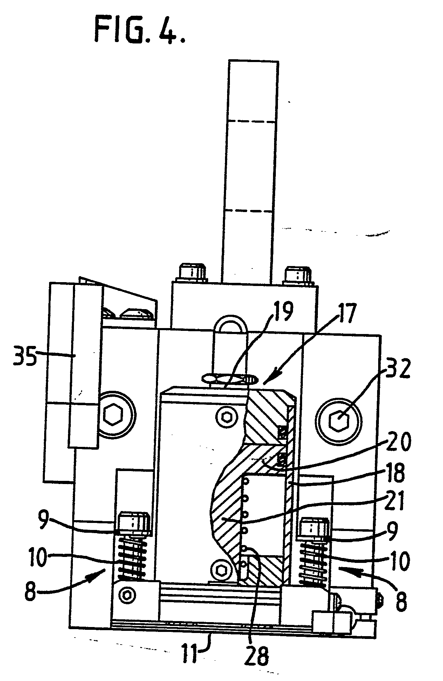

Workpiece clamps used on punch presses for clamping sheet material during punching, are well known. An example of a recent form of workpiece clamp is shown in Figure 4 of US—A—4 143 571.

Another clamp for holding sheet material, but in a conveyor apparatus, is disclosed in FR—A—1 517 642. In that disclosure the sheet material is held in a gripper unit having a pair of jaws between which is a spring-loaded switching-actuating plunger which causes the jaws to close when the sheet is detected.

In punching sheet material, it is important that the workpiece sheet is positioned accurately relative to the punch head so that the holes to be punched are punched in the correct position. Thus, on each workpiece clamp a fixed datum face is provided and the workpiece sheet is abutted against the respective datum faces of the workpiece clamp. However, previously, the position of the workpiece sheet relative to the datum face of a workpiece clamp has been dependent, firstly upon the operator positioning the workpiece sheet correctly at the start of the operation and, secondly upon the workpiece clamps holding the workpiece sheet rigidly in position during the punching operation.

An object of the present invention is to provide an improved workpiece clamp.

According to the present invention there is provided a workpiece clamp for holding a workpiece sheet relative to the punch head of a punch press during punching comprising a body, two jaws at least one of which is movable towards the other to clamp the workpiece therebetween and a datum face between the jaws against which the workpiece abuts during clamping the datum face being fixed in position relative to the body in the plane of the workpiece sheet, characterised by the provision of sensing means associated with the datum face to identify whether or not the workpiece sheet is in abutment with the datum face.

In the preferred arrangement the workpiece clamp may comprise mounting means for mounting the clamp to a workpiece support carriage, a support member projecting from the body and carrying a lower jaw at its free end, an elongate upper jaw pivoted on the support member and arranged at one end to cooperate with the lower jaw to clamp the workpiece, the other end of the upper jaw carrying a cylinder assembly operative to cause rotation of the upper jaw relative to its pivot to clamp the workpiece, the datum face being on the support member.

Preferably the sensing means comprises a spring-biassed rod the free end of which, in its position of rest, projects beyond the datum face The other end of the rod is arranged to cooperate with a feed-back device when the rod is pushed rearwardly by insertion of a workpiece between the jaws to identify for a computer control, that the workpiece abuts the datum face.

According to another aspect of the invention a workpiece clamp may comprise a body, mounting means for mounting the clamp to a workpiece support carriage, a lower jaw pivoted to the mounting means, and an elongate upper jaw pivoted intermediate its ends and arranged at one end to cooperate with the lower jaw to clamp a workpiece, the other end of the upper jaw carrying a cylinder assembly operative to cause rotation of the jaw relative to its pivot to clamp a workpiece, a datum face between the upper and lower jaws, the lower jaw including first resilient means restricting pivotal movement of the lower jaw in one direction and second resilient means restricting pivotal movement of the lower jaw in the opposite direction, and sensing means associated with the datum face to identify whether or not the workpiece is in abutment with the datum face.

Preferably the first resilient means is a plate spring restricting downward deflection of the lower jaw and the second resilient means is a coil spring restricting upward deflection of the lower jaw.

The invention will now be described by way of example with reference to the accompanying drawings in which:

Figure 1 is an exploded view of a preferred embodiment;

Figure 2 is an assembled plan view of the embodiment of figure 1 with one or two additional attachments;

Figure 3 is a side elevation of figure 2; and

Figure 4 is a front elevation of the figures 2 and 3 partially broken away.

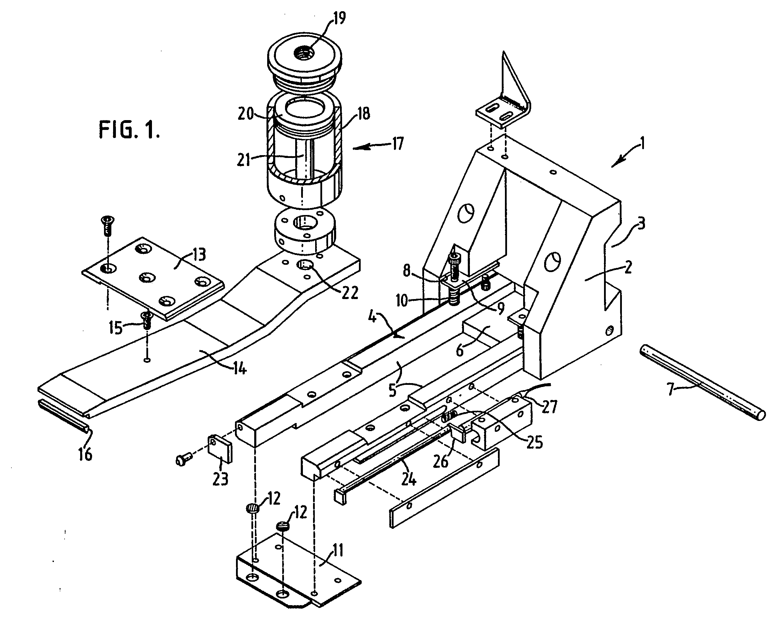

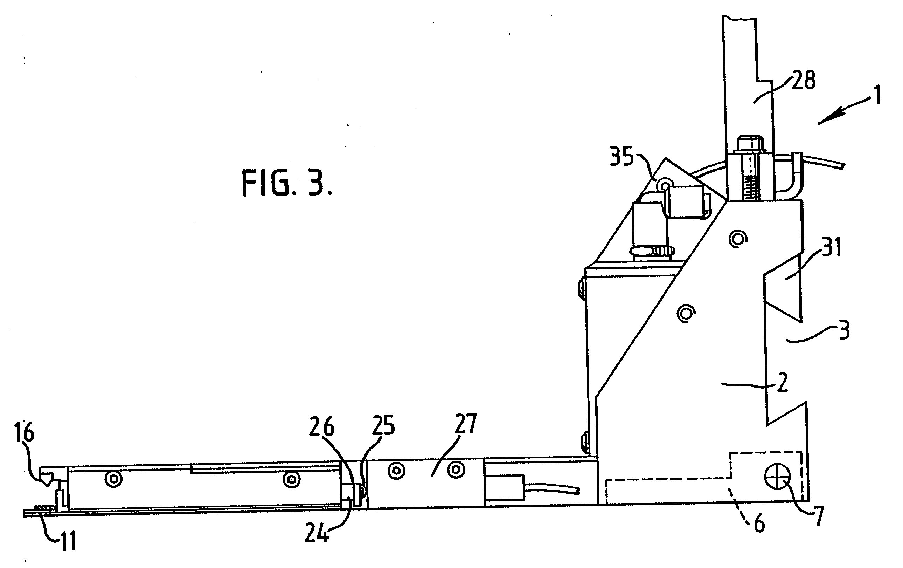

In the drawings a workpiece clamp 1 has a mounting block 2 having a groove 3 for slidably engaging a dove-tail strip on a workpiece carriage of a machine tool: the groove 3 being partially defined by a releasable locking strip 31. Extending from the mounting block 2 is support member 4 consisting of two spaced arms 5 connected together by a plate 6 and pivotally mounted on pivot bar 7 (Fig. 1 and 3). The support member 4 is resiliently biassed into its normal operative position by two spring assemblies 8 each of which comprise a plate spring 9 permitting slight downward deflection, and a coil spring 10 permitting upward deflection, about pivot bar 7.

Secured to the underside of the free end of support member 4 is a lower jaw 11 having two serrated tungsten buttons 12 which grip the workpiece in use: from the drawing it will be seen that the serrations on the buttons are set at 90° to one another to provide the best grip. The upper side of the support member 4 receives a plate 13 to which the upper jaw 14 is pivotally connected at 15. The upper jaw 14 is elongate having a tungsten tip 16 at one end, for cooperating with buttons 12 in gripping a workpiece, and a pneumatic cylinder assembly 17 at the other end.

The cylinder assembly 17 comprises a cylinder 18 which is adapted to receive compressed air through an inlet 19 to cause clamping movement of the upper jaw 14. The cylinder 18 has a reciprocal piston 20 which includes a depending shaft 21 protruding through the bottom of the cylinder 18 and through an aperture 22 in the end of the jaw 14. As seen from the drawing the upper jaw 14 is specially contoured and in the position of rest the end of the jaw including the cylinder assembly 17 rests on plate 6.

The upper and lower jaws 14 and 11 define between them the clamping area the depth of which is limited by datum faces 23 of the support member 4. Secured on one arm 5 of the support member 4 is a sensing device comprising an elongate rod 24 biassed at one end by a spring 25 so that the other end of the rod, when the clamp is inoperative, protrudes beyond the associated datum face 23. The said one end of the rod 24 has a plate 26 which serves as a sensor actuator and which cooperates with a feed-back device 27 to the computer control for the machine tool, said feed-back device 27 being a proximity switch having an active surface aligned with the actuator plate 26.

In use, in the inoperative position of the clamp, the rod 24 protrudes beyond the datum face 23 and the end of the upper jaw 14 including the cylinder assembly 17 rests on plate 6. When a workpiece is to be clamped the workpiece is pushed between the jaws 11 and 14 up against datum faces 23, this pushes back rod 24 against the force of spring 25 causing actuator plate 26 to activate feed-back proximity device 27. Compressed air is then supplied to the cylinder assembly 17 which forces piston 20 downwardly and in turn causes the depending shaft 21 to protrude further so as to engage the plate 6. This causes the cylinder assembly 17, and that end of the upper jaw 14, to be lifted effecting rotation of the jaw 14 about pivot 15 so as to clamp the workpiece between the cooperating jaws 14 and 11. On stopping the supply of the compressed air, the cylinder 18 is vented and it returns to its original position by its own weight and the piston 20 is returned by a return spring 28.

In the event that the workpiece becomes displaced from the datum faces 23 during an operating sequence the rod 24 ceases to contact feed-back device 27 so that a control is operative to stop the sequence.

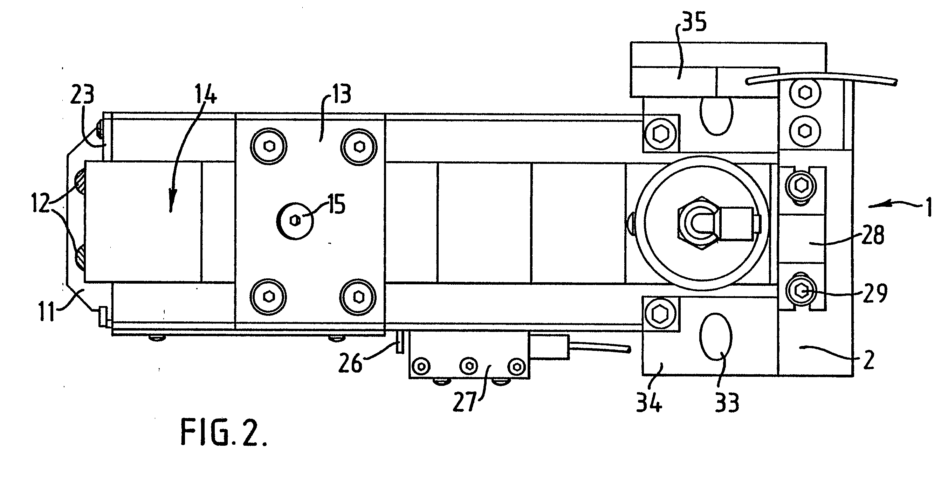

Referring particulary to figures 2 to 4 it will be seen that the workpiece clamp 1 includes a sensor actuator 28 secured to the top of the mounting block 2 by screws 29. The sensor actuator 28 is operative to activate a sensor (not shown) on the X-axis of a punching machine. In addition it will be seen that the releasable locking strip 31 is held in position by screws 32 which pass through holes 33 in each side arm 34 of the mounting block 2. In order to detect loosening of the locking screws 32 in the side arms 34 a single proximity switch 35 is provided.

## Claims

1. A workpiece clamp for holding a workpiece sheet relative to the punch head of a punch press during punching comprising a body (2), two jaws (11, 14) at least one (14) of which is movable towards the other to clamp the workpiece therebetween and a datum face (23) between the jaws against which the workpiece abuts during clamping, the datum face (23) being fixed in position relative to the body (2) in the plane of the workpiece sheet, characterised by the provision of sensing means (24, 25, 26, 27) associated with the datum face (23) to identify whether or not the workpiece sheet is in abutment with the datum face (23).

2. A workpiece clamp according to claim 1 characterised by mounting means (3, 31) for mounting the clamp to a workpiece support carriage, a support member (4) projecting from the body (2) and carrying a lower jaw (11) at its free end and an elongate upper jaw (14) pivoted on the support member (4) and arranged at one end to cooperate with the lower jaw (11) to clamp the workpiece, the other end of the upper jaw (14) carrying a cylinder assembly (17) operative to cause rotation of the upper jaw (14) relative to its pivot (7) to clamp the workpiece, the datum face (23) being on the support member (4).

3. A workpiece clamp according to claims 1 or 2 characterised in that the sensing means (24, 25, 26, 27) comprises a member (24) biassed so as to project beyond the datum face.

4. A workpiece clamp according to claim 3 characterised in that the sensing means (24, 25, 26, 27) comprises a spring-biassed rod (24) having, a free end which, in its position of rest, projects beyond the datum face (23), and the other end arranged to cooperate with a feed-back device (27) when the rod is pushed rearwardly by insertion of a workpiece between the jaws (11, 14) to identify that the workpiece abuts the datum face (23).

5. A workpiece clamp according to any of claims 1 to 4 characterised in that said at least one movable jaw (11) includes first resilient means (9) restricting pivotal movement in one direction and second resilient mean (10) restricting pivotal movement in the opposite direction.

6. A workpiece clamp according to claim 5 characterised in that the first resilient means is a plate spring (9) and the second resilient means is a coil spring (10).

7. A workpiece clamp comprising a body (2), mounting means (3, 31) for mounting the clamp to a workpiece support carriage, a lower jaw (11) pivoted to the mounting means, and an elongate upper jaw (14) pivoted intermediate its ends (7) and arranged at one end to cooperate with the lower jaw to clamp a workpiece, the other end of the upper jaw carrying a cylinder assembly operative to cause rotation of the jaw relative to its pivot to clamp a workpiece, and a datum face (23) between the jaws (11, 14) characterised in that sensing means (24, 25, 26, 27) are associated with the datum face to identify whether or not the workpiece is in abutment with the datum face, and the lower jaw includes first resilient means (9) restricting pivotal movement of the lower jaw (11) in one direction and second resilient means (10) restricting pivotal movement of the lower jaw (11) in the opposite direction.

8. A workpiece clamp according to claim 7 characterised in that second sensing means (35) are provided to detect loosening of said mounting means for mounting the clamp to a workpiece support carriage.

**Revendications**

1. Dispositif de serrage d'une pièce à usiner pour maintenir une plaque de pièce à usiner par rapport à la tête d'une machine à découper pendant le perçage, comprenant un corps (2) deux mâchoires (11, 14) dont au moins une (14) est déplaçable en direction de l'autre pour serrer la pièce à usiner entre elles et une face de référence (23) entre les mâchoires contre laquelle la pièce à usiner vient en butée pendant le serrage, la face de référence (23) étant fixée en position par rapport au corps (2) dans le plan de la plaque à usiner, caractérisé en ce que des moyens détecteurs (24, 25, 26, 27) associés à la face de référence (23) sont prévus pour détecter si la plaque à usiner est ou n'est pas en butée avec la face de référence (23).

2. Dispositif de serrage selon la revendication 1, caractérisé en ce qu'il comprend des moyens de montage (3, 31) pour monter le dispositif de serrage sur un chariot de support de la pièce à usiner, une pièce de support (4) faisant saillie du corps (2) et portant une mâchoire inférieure (11) à son extrémité libre et une mâchoire supérieure allongée (14) montée pivotante sur la pièce de support (4) et aménagée à une extrémité pour coopérer avec la mâchoire inférieure (11) pour serrer la pièce à usiner, l'autre extrémité de la mâchoire supérieure (14) portant un bloc cylindre (17) apte à faire tourner la mâchoire supérieure (14) par rapport à son axe de pivotement (7) pour serrer la pièce à usiner la face de référence (23) étant sur la pièce de support (4).

3. Dispositif de serrage selon l'une des revendications 1 ou 2, caractérisé en ce que les moyens détecteurs (24, 25, 26, 27) comprennent un élément (24) influencé de façon à faire saillie au-delà de la face de référence.

4. Dispositif de serrage selon la revendication 3, caractérisé en ce que les moyens détecteurs (24, 25, 26, 27) comprennent une tige (24) soumise à l'influence d'un ressort, dont l'extrémité libre, dans sa position de repos, fait saillie au-delà de la face de référence (23) et dont l'autre extrémité est arrangée pour coopérer avec un dispositif de réaction (27) lorsque la tige est poussée en arrière lors de l'insertion d'une pièce à usiner entre les mâchoires (11, 14) pour détecter que cette pièce à usiner est en butée contre la face de référence (23).

5. Dispositif de serrage selon l'une quelconque des revendications 1 à 4, caractérisé en ce qu'au moins une mâchoire déplaçable (11) comprend un premier moyen résistant (9) limitant le mouvement de pivotement dans une direction et un second moyen résistant (10) limitant le mouvement de pivotement dans la direction opposée.

6. Dispositif de serrage selon la revendication 5, caractérisé en ce que le premier moyen résistant est un ressort à lame (9) et en ce que le second moyen résistant est un ressort hélicoïdal (10).

7. Dispositif de serrage comprenant un corps (2), des moyens de montage (3, 31) pour monter le dispositif de serrage sur un chariot de support de la pièce à usiner, une mâchoire inférieure (11) pouvant pivoter par rapport aux moyens de montage, et une mâchoire supérieure allongée (14) montée pivotante entre ses extrémités (7) et arrangée à une extrémité pour coopérer avec la mâchoire inférieure pour serrer une pièce à usiner, l'autre extrémité de cette mâchoire supérieure supportant un bloc cylindre apte à provoquer la rotation de la mâchoire par rapport à son axe de pivotement pour serrer une pièce à usiner, et une face de référence (23) entre les mâchoires (11, 14), caractérisé en ce que des moyens détecteurs (24, 25, 26, 27) sont associés à la face de référence pour détecter si la pièce à usiner est ou n'est pas en butée avec la face de référence et en ce que la mâchoire inférieure comprend des premiers moyens résistants (9) limitant le mouvement de pivotement de la mâchoire inférieure (11) dans une direction et des seconds moyens résistants (10) limitant le mouvement de pivotement de la mâchoire inférieure (11) dans la direction opposée.

8. Dispositif de serrage selon la revendication 7, caractérisé en ce que des seconds moyens détecteurs (35) sont prévus pour détecter un desserrage des moyens de montage pour monter le dispositif de serrage sur un chariot de support de la pièce à travailler.

**Patentansprüche**

1. Werkstückspannvorrichtung zum Einspannen eines plattenförmigen Werkstücks in bezug auf den Stanzkopf einer Stanzmaschine während des Stanzvorgangs mit einem Hauptteil (2) mit zwei Spannbacken (11, 14), von denen zum Einspannen des Werkstücks zwischen denselben mindestens eine (14) auf die andere zu bewegt werden kann und mit einer zwischen den Spannbacken angeordneten Bezugsfläche (23), an der das Werkstück während des Spannvorgangs anliegt und die in ihrer lage bezüglich des Hauptteils (2) in der Ebene des plattenförmigen Werkstücks befestigt ist, dadurch gekennzeichnet, daß eine Fühleinrichtung (24, 25, 26, 27), vorgesehen ist, die der Bezugsfläche (23) zugeordnet ist, um erkennen zu können, ob das plattenförmige Werkstück an der Bezugsfläche (23) anliegt oder nicht.

2. Werkstückspannvorrichtung nach Anspruch 1, gekennzeichnet durch Befestigungsvorrichtungen (3, 31) zum Befestigen der Spannvorrichtung auf einem Werkstück-Auflageschlitten und durch ein Tragteil (4), das von dem Hauptteil (2) absteht, das an seinem freien Ende eine untere Spannbacke (11) trägt und das weiter einen längliche obere Spannbacke (14) trägt, welche auf dem Tragteil (4) drehbar gelagert ist und die an einem Ende so ausgebildet ist, daß sie mit der unteren Spannbacke (11) zum Einspannen des Werkstücks zusammenwirken kann, wobei das andere Ende der oberen Spannbacke (14), einen Zylinderaufbau (17) trägt, dessen Bewegung eine Drehung der oberen Spannbacke (14) um ihren Drehpunkt (7) bewirkt, um das Werkstück einzuspannen und wobei sich die Bezugsfläche (23) an dem Tragteil (4) befindet.

3. Werkstückspannvorrichtung nach Anspruch 1 oder 2, dadurch gekennzeichnet, daß die Fühleinrichtung (24, 25, 26, 27) ein Teil (24) umfaßt, das so vorgespannt ist, daß es über die Bezugsfläche (23) hinausragt.

4. Werkstückspannvorrichtung nach Anspruch 3, dadurch gekennzeichnet, daß die Fühleinrichtung (24, 25, 26, 27) eine von einer Feder vorgespannte Stange (24) unfaßt, deren freies Ende in seiner Ruhelage über die Bezugsfläche (23) hinausragt und deren anderes Ende so angeordnet ist, daß es mit einer Rückkopplungseinheit (27) zusammenwirkt, wenn die Stange durch das Einschieben eines Werkstücks zwischen die Spannbacken (11, 14) nach hinten geschoben wird, um erkennen zu können, ob das Werkstück an der Bezugsfläche (23) anliegt.

5. Werkstückspannvorrichtung nach einem der Ansprüche 1 bis 4, dadurch gekennzeichnet, daß mindestens eine bewegbare Spannbacke (11) eine erste Federvorrichtung (9) umfaßt, die die Drehbewegung in einer Richtung begrenzt, sowie eine zweite Federvorrichtung (10), die die Drehbewegung in der anderen Richtung begrenzt.

6. Werkstückspannvorrichtung nach Anspruch 5, dadurch gekennzeichnet, daß die erste Federvorrichtung eine Blattfeder (9) ist und die zweite Federvorrichtung eine Spiralfeder (10).

7. Werkstückspannvorrichtung mit einem Hauptteil (2), Befestigungsvorrichtungen (3, 31) zum Befestigen der Spannvorrichtung auf einem Werkstück-Auflageschlitten, einer unteren Spannbacke (11), die an den Befestigungsvorrichtungen drehbar gelagert ist, und einer länglichen oberen Spannbacke (14), die zwischen ihren Enden (7) drehbar gelagert ist und die an ihrem einen Ende so angeordnet ist, daß sie mit der unteren Spannbacke zum Einspannen eines Werkstücks zusammenwirken kann, während das andere Ende der oberen Spannbacke einen Zylinderaufbau trägt, dessen Bewegung eine Drehung der Spannbacke um ihren Drehpunkt bewirkt, um ein Werkstück einzuspannen, und einer Bezugsfläche (23) zwischen den Spannbacken (11, 14), dadurch gekennzeichnet, daß der Bezugsfläche eine Fühleinrichtung (24, 25, 26, 27) zugeordnet ist, um erkennen zu können, ob das Werkstück an der Bezugsfläche anliegt oder nicht, und daß die untere Spannbacke eine erste Federvorrichtung (9) umfaßt, die die Drehbewegung der unteren Spannbacke (11) in einer Richtung begrenzt, sowie eine zweite Federvorrichtung (10), die die Drehbewegung der unteren Spannbacke (11) in der anderen Richtung begrenzt.

8. Werkstückspannvorrichtung nach Anspruch 7, dadurch gekennzeichnet, daß eine zweite Fühleinrichtung (35) vorgesehen ist, um den Verlust der genannten Befestigungsvorrichtungen, mit denen die Spannvorrichtung auf einem Werkstück-Auflageschlitten befestigt werden kann, erkennen zu können.

FIG. 1.

0038198

FIG.2.

FIG. 3.

# FIG. 4.